# EUROPÄISCHE PATENTSCHRIFT

(11) **EP 0 740 383 B1**
(45) Veröffentlichungstag und Bekanntmachung des Hinweises auf die Patenterteilung: **30.08.2000**
(21) Anmeldenummer: 96250095.5
(22) Anmeldetag: 25.04.1996
(51) Int. Cl.: H02H 7/09

(54) **Anordnung mit einem ein elektrisches Energieversorgungsnetz über einen Leistungsschalter angeschlossenen Leitungsabgang mit mindestens einem Verbraucher und mit einer Unterspannungs-Schutzanordnung**
Device with a line connecting to an electrical distribution network through a circuit breaker, with at least one load and with an undervoltage protection
Dispositif avec une ligne de couplage de réseau de distribution électrique à travers un disjoncteur, avec au moins une charge et avec dispositif de protection contre les sous-tensions

(30) Priorität: 25.04.1995 DE 19516616
(43) Veröffentlichungstag der Anmeldung: 30.10.1996
(73) Patentinhaber: SIEMENS AKTIENGESELLSCHAFT, 80333 München (DE)
(72) Erfinder: Fritschi, Jürgen, 13353 Berlin (DE)

(56) Entgegenhaltungen:
- DE-A- 4 232 476
- US-A- 4 453 117

## Beschreibung

Dem "Handbuch Schutztechnik" von W.Doemeland, 5. Auflage, 1995, Seite 118, ist entnehmbar, daß eine Unterspannungs-Schutzanordnung besonders in Anlagen mit Motorabgängen erforderlich ist. Dabei sind mit "Motorabgängen" offenbar Leitungsabgänge von einem elektrischen Energieversorgungsnetz gemeint, die mindestens einen Verbraucher in Form eines Motors enthalten und über einen Leistungsschalter an das Energieversorgungsnetz angeschlossen sind. Die Unterspannungs-Schutzanordnung kann dabei offensichtlich über eine Spannungswandler-Anordnung an den Leitungsabgang angeschlossen sein. Bei der bekannten Anordnung ist die Unterspannungs-Schutzanordnung mit einem nachgeschalteten Zeitglied versehen, mit dem anscheinend sichergestellt werden soll, daß bei einem nur sehr kurzzeitigen Absinken der Spannung unter einen kritischen Spannungsschwellenwert nicht sofort die Unterspannungs-Schutzanordnung angeregt wird und den Leistungsschalter auslöst. Erst wenn bei der bekannten Anordnung nach einem Absinken der Spannung unter den Spannungsschwellenwert die durch das nachgeschaltete Zeitglied definierte Zeitdauer abgelaufen ist und die erfaßte Spannung dann immer noch unterhalb des vorgegebenen Spannungsschwellenwertes liegt, wird von der Unterspannungs-Schutzanordnung der Leistungsschalter ausgelöst und damit der Leitungsabgang von dem elektrischen Energieversorgungsnetz abgetrennt. Damit wird der Leitungsabgang spannungslos, wodurch die Unterspannungs-Schutzanordnung weiterhin angeregt bleibt und den Leistungsschalter ausgelöst hält. Dies gilt auch dann, wenn der Fehler im Leitungsabgang wieder behoben ist, so daß bei der bekannten Anordnung durch eine zusätzliche Schaltungsmaßnahme die Anregung der Unterspannungs-Schutzanordnung aufgehoben werden muß.

Die Erfindung geht von der bekannten Anordnung aus und betrifft demzufolge eine Anordnung mit einem an ein elektrisches Energieversorgungsnetz über einen Leistungsschalter angeschlossenen Leitungsabgang mit mindestens einem Verbraucher und mit einer Unterspannungs-Schutzanordnung für den mindestens einen Verbraucher, bei der die Unterspannungs-Schutzanordnung über eine Spannungswandler-Anordnung an den Leitungsabgang angeschlossen ist, und stellt sich die Aufgabe, diese Anordnung so zu verbessern, daß nach einer Auslösung des Leistungsschalters die Anregung der Unterspannungs-Schutzanordnung selbsttätig zurückgenommen wird.

Zur Lösung dieser Aufgabe ist bei der oben behandelten Anordnung erfindungsgemäß an die Unterspannungs-Schutzanordnung eine im Zuge des Leistungsschalters liegende Stromwandler-Anordnung angeschlossen, und die Unterspannungs-Schutzanordnung ist so ausgebildet, daß sie ein Spannungsunterschreitungssignal erzeugt, wenn die mittels der Spannungswandler-Anordnung erfaßte Spannung an dem Leitungsabgang unterhalb eines vorgegebenen Spannungsschwellenwertes liegt, und ein Stromüberschreitungssignal bildet, wenn der mittels der Stromwandler-Anordnung ermittelte Strom durch den Leitungsabgang oberhalb eines vorgegebenen Stromschwellenwertes liegt, sowie ein Anregesignal erzeugt, wenn das Spannungsunterschreitungssignal und das Stromüberschreitungssignal gleichzeitig auftreten.

Es ist aus der US-A-4,453,117 eine Anordnung zur Motorsteuerung und Motorüberwachung bekannt, bei der mittels Schaltschützen ein Leitungsabgang mit mindestens einem Verbraucher gebildet ist und bei der eine Unterspannungsschutzanordnung für der Verbraucher über eine Spannungswandler- und eine Stromwandler-Anordnung an die Leitung angeschlossen ist, so daß bei Spannungsunterschreitung ein Spannungsunterschreitungssignal und bei Stromüberschreitung ein Stromüberschreitungssignal gebildet wird, jedoch wird hier die Spannung vor dem Leitungsabgang erfaßt, und es führen Spannungsunter- oder Sttromüberschreitung unabhängig voneinander zu einem Anrege- bzw. Auslösesignal für die Schaltschütze. Es findet keine logische UND-Verknüpfung dieser Ereignisse statt derart, daß bei einem auf das Anregesignal hin erzeugten Auslösesignal für den Leistungsschalter die Anregung der Unterspannungs-Schutzanordnung selbsttätig zurückgenommen wird.

Der wesentliche Vorteil der erfindungsgemaßen Anordnung besteht darin, daß bei ihr von der Unterspannungs-Schutzanordnung ein Anregesignal nur dann erzeugt wird, wenn mit dem Spannungsunterschreitungssignal gleichzeitig das Stromüberschreitungssignal auftritt. Dies bedeutet, daß bei einem auf das Anregesignal hin erzeugten Auslösesignal für den Leistungsschalter die Anregung der Unterspannungs-Schutzanordnung stets selbsttätig zurückgenommen wird, weil das Stromüberschreitungssignal wegen des dann geöffneten Leistungsschalters verschwindet. Das Auslösesignal am Leistungsschalter wird damit beendet, so daß der Leistungsschalter beispielsweise nach Beheben des Fehlers im Leitungsabgang ohne weiteres auf einen Einschaltbefehl reagieren kann, weil von der Unterspannungs-Schutzanordnung ein Anrege- bzw. Auslösesignal nicht mehr bereitgestellt ist. Zusätzliche Schaltungsmaßnahmen, um - wie bei der bekannten Anordnung erforderlich - das Anregesignal bzw. das Auslösesignal zu beenden, sind bei der erfindungsgemäßen Anordnung demzufolge nicht erforderlich.

Bei der erfindungsgemäßen Anordnung hat es sich als vorteilhaft erwiesen, wenn die Unterspannungs-Schutzanordnung derart ausgebildet ist, daß sie auf das Anregesignal hin nach einer vorgegebenen Zeitverzögerung ein Auslösesignal an den Leistungsschalter abgibt. Diese vorgegebene Zeitverzögerung verhindert - wie das Zeitglied bei der bekannten Anordnung - daß bereits durch ein kurzzeitiges Absinken der Spannung unter den vorgegebenen Spannungsschwellenwert ein Anregesignal erzeugt wird.

Bei einer weiteren vorteilhaften Ausbildung der erfindungsgemaßen Anordnung ist die Unterspannungs-Schutzanordnung so ausgebildet, daß sie nach einem auf das Auslösesignal folgenden Einschaltbefehl an den Leistungsschalter das Stromüberschreitungssignal nach einer vorgewählten Zeitdauer wirksam werden läßt. Vorteil dieser Ausgestaltung der erfindungsgemaßen Anordnung ist, daß nicht sofort nach dem (Wieder-)Einschaltbefehl erneut eine Anregung durch die Unterspannungs-Schutzanordnung gegeben wird, sondern erst die vorgegebene Zeitdauer nach dem Auftreten des Stromüberschreitungssignal mit der Prüfung abgewartet wird, ob die Spannung am Leitungsabgang den Spannungsschwellenwert noch nicht überschritten hat, um dann gegebenenfalls ein erneutes Anregesignal zu erzeugen.

Als besonders vorteilhaft wird eine weitere Ausgestaltung der erfindungsgemaßen Anordnung angesehen, bei der die Unterspannungs-Schutzanordnung so ausgebildet ist, daß sie nach dem Einschaltbefehl die Spannung an dem Leitungsabgang auf Überschreiten eines vorgewählten Rückfallspannungswertes überprüft, der oberhalb des vorgegebenen Spannungsschwellenwertes liegt, und ein Betätigungssignal erzeugt, wenn das Überschreiten des Rückfallspannungswertes nach Ablauf der vorgewählten Zeitdauer erfolgt. Dies bedeutet, daß die Spannung nach dem Einschaltbefehl ausreichend schnell auf den Rückfallspannungswert ansteigen muß, um eine erneute Anregung zu vermeiden.

Zur Erläuterung der Erfindung ist in
- Figur 1: ein Ausführungsbeispiel einer erfindungsgemäßen Anordnung, in
- Figur 2: ein Logik-Diagramm zur Erläuterung der Wirkungsweise der in Figur 1 dargestellten Anordnung und in
- Figur 3: eine Darstellung mit mehreren Zeitdiagrammen zur weiteren Erläuterung der Wirkungsweise der Anordnung nach Figur 1 wiedergegeben.

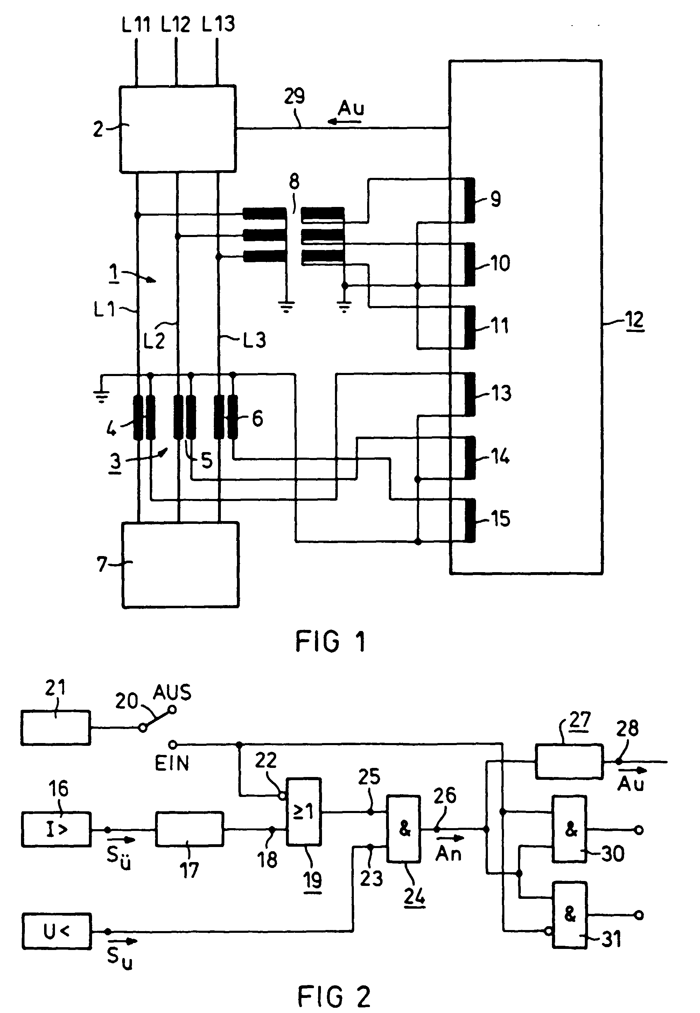

Die in Figur 1 dargestellte Anordnung weist einen Leitungsabgang 1 mit Leitungen L1, L2 und L3 auf, die einerseits an einen Leistungsschalter 2 und andererseits über eine Stromwandler-Anordnung 3 mit Stromwandlern 4, 5 und 6 an einen Verbraucher in Form eines Motors 7 geführt sind. Der Leistungsschalter 2 ist auf seiner von dem Leitungsabgang 1 abgewandten Seite über Leitungen L11, L12 und L13 an ein nicht dargestelltes elektrisches Energieversorgungsnetz, z.B. eine Sammelschiene, angeschlossen. Die Stromwandler-Anordnung kann auch auf der Energieversorgungsnetzseite des Leistungsschalters 2 liegen.

Wie die Figur 1 ferner erkennen läßt, ist an den Leitungsabgang 1 mit den Leitungen L1 bis L3 primärseitig auch eine Spannungswandler-Anordnung 8 angeschlossen, die sekundärseitig über Wicklungen 9, 10 und 11 den Spannungen an den Leitungen L1 bis L3 proportionale Spannungen an eine Unterspannungs-Schutzanordnung 12 überträgt. Über weitere Wicklungen 13, 14 und 15 der Unterspannungs-Schutzanordnung, die an Sekundärwicklungen der Stromwandler-Anordnung 3 angeschlossen sind, wird die Unterspannungs-Schutzanordnung 12 mit den Strömen in den Leitungen L1 bis L3 proportionalen Strömen versorgt.

In der Unterspannungs-Schutzanordnung 12, die im wesentlichen aus einer Datenverarbeitungsanlage besteht, werden aus den analogen Größen an den Wicklungen 9 bis 11 sowie 13 bis 15 entsprechende digitale Eingangsgrößen gebildet, die - wie nachstehend im einzelnen erläutert wird - in verschiedener Hinsicht untersucht und verarbeitet werden.

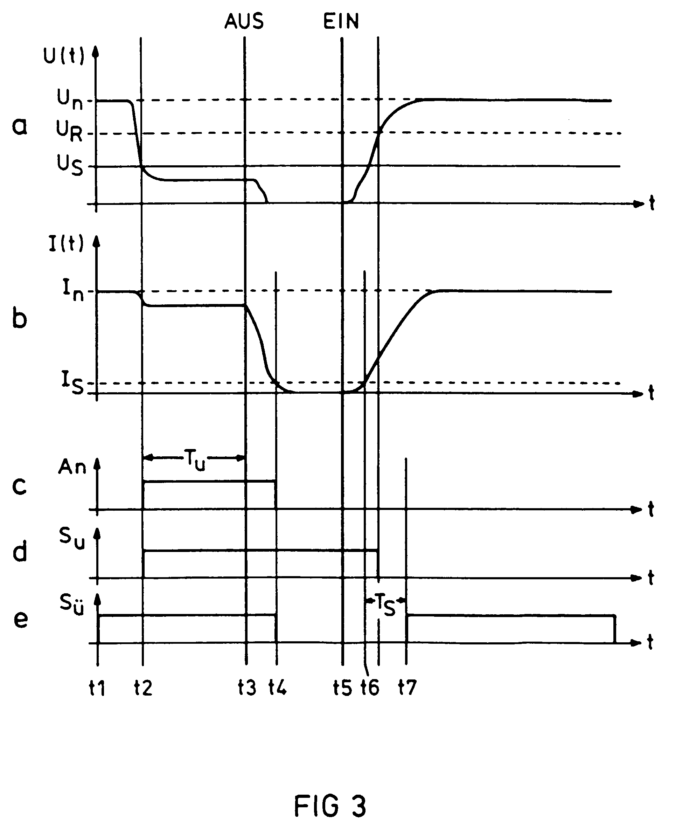

So wird in der Unterspannungs-Schutzanordnung 12 der jeweils größte Strom in den Leitungen L1 bis L3 erfaßt und darauf untersucht, ob er oberhalb eines Stromschwellenwertes I_{S} liegt (vgl. Diagramm b der Fig. 3). Ist dies der Fall, dann wird von einem Block 16 ein Stromüberschreitungssignal S_{ü} erzeugt, das nach Ablauf einer durch ein Zeitglied 17 (vgl. Figur 2) bestimmten Zeitdauer T_{S} an einem Eingang 18 eines dem Zeitglied 17 nachgeordneten ODER-Gliedes 19 ansteht. Ist über einen in eine "Ein"-Stellung gebrachten Kontakt 20 ein Impulsgeber 21 angeschlossen, dann wird einem weiteren invertierenden Eingang 22 des ODER-Gliedes 19 ein "1"-Signal zugeführt, woraufhin am Ausgang des ODER-Gliedes 19 ein "1"-Signal gebildet wird. Das Diagramm e der Figur 3 zeigt, daß zum Zeitpunkt tl das Stromüberschreitungssignal S_{ü} am Ausgang des ODER-Gliedes 19 auftritt.

Wie insbesondere das Diagramm a der Figur 3 zeigt, ist aufgrund eines angenommenen Fehlers im Leitungsabgang 1 bzw. im Motor 7 die Spannung U(t) am Leitungsabgang 1 von einem Nennwert Uₙ soweit abgesunken, daß sie zum Zeitpunkt t2 einen Spannungsschwellenwert U_{S} unterschreitet. Als Spannung U(t) wird die jeweils kleinste Spannung an den Leitungen L1 bis L3 des Leitungsabganges 1 verwendet. Es ergibt sich dann an einem Eingang 23 eines UND-Gliedes 24 (siehe Figur 2) ein Spannungsunterschreitungssignal Sᵤ mit dem Wert"1",wie es im Diagramm d der Figur 3 veranschaulicht ist.

Da zum Zeitpunkt t2 nach wie vor das Stromüberschreitungssignal S_{ü} an dem anderen Eingang 25 des UND-Gliedes 24 ansteht (vgl. Diagramm e der Figur 3), wird am Ausgang 26 des UND-Gliedes 24 zum Zeitpunkt t2 ein Anregesignal An erzeugt, wie es in dem Diagramm c der Figur 3 wiedergegeben ist. Dieses Anregesignal An wird - siehe Fig. 2 - einem weiteren Zeitglied 27 zugeführt, mit dem eine vorgegebene Zeitdauer Tᵤ eingestellt ist. Ist diese vorgegebene Zeitdauer Tᵤ verstrichen, was gemäß der Figur 3 zum Zeitpunkt t3 der Fall ist, dann entsteht am Ausgang 28 des weiteren Zeitgliedes 27 ein Auslösesignal Au, das über eine Verbindungsleitung 29 auf den Leistungsschalter 2 übertragen wird.

Der Leistungsschalter 2 öffnet daraufhin, wodurch der Leitungsabgang 1 von dem nicht dargestellten elektrischen Energieversorgungsnetz abgetrennt wird. Dies bedeutet, daß die Spannung am Leitungsabgang 1 anschließend bis auf den Wert Null abfällt, wie dies das Diagramm a der Figur 3 deutlich zeigt. Außerdem sinkt der Strom im Leitungsabgang 1 ab und erreicht zu einem Zeitpunkt t4 einen Wert, der dem Stromschwellenwert I_{S} entspricht. Daraufhin verschwindet das Stromüberschreitungssignal S_{ü}, wie das Diagramm e der Figur 3 erkennen läßt. Damit wird zum Zeitpunkt t4 die Anregung der Unterspannungs-Schutzanordnung 12 überhaupt zurückgenommen, so daß an der Verbindungsleitung 29 ein Auslösesignal Au nicht weiter ansteht.

Wird nach Beseitigung des Fehlers im Leitungsabgang 1 oder im Verbraucher 7 zum Zeitpunkt t5 wieder ein Einschaltbefehl von der Unterspannungs-Schutzanordnung 12 an den Leistungsschalter 2 gegeben, dann steigt die Spannung U(t) am Leitungsabgang 1 gemäß dem Diagramm a der Figur 3 und auch der Strom I(t) gemäß dem Diagramm b der Figur 3 an. Eine Anregung wird von der Unterspannungs-Schutzanordnung 12 zu diesem Zeitpunkt nicht gegeben, weil der Strom I(t) im Leitungsabgang 1 zunächst unterhalb des Stromschwellenwertes I_{S} liegt. Erst zum Zeitpunkt t6 übersteigt der Strom den Stromschwellenwert I_{S}, wodurch ein Stromüberschreitungssignal S_{ü} an das eine Zeitglied 17 gegeben wird. Dieses Zeitglied bewirkt die oben bereits erwähnte Zeitverzögerung T_{S}, so daß es erst zum Zeitpunkt t7 am Ausgang des ODER-Gliedes 19 als "1"-Signal wirksam wird. Bei dem dargestellten Beispiel wird nach dem Einschaltbefehl, also vom Zeitpunkt t5 ab, überprüft, ob die ansteigende Spannung U(t) einen Rückfallspannungswert U_{R} überschreitet. Geschieht dies - wie dargestellt - in der Zeit bis zum Zeipunkt t7, dann erfolgt keine erneute Anregung der Unterspannungs-Schutzanordnung 12. Ist dagegen in Abweichung von der dargestellten Situation zum Zeitpunkt t7 die Spannung U(t) am Leitungsabgang 1 nicht über den Rückfallspannungswert U_{R} angestiegen, dann wird an dem Eingang 23 des UND-Gliedes 24 ein "1"-Signal gebildet, auf das hin nach Ablauf des weiteren Zeitgliedes 27 am Ausgang 28 ein Anregesignal erzeugt wird.

In Abweichung von dem dargestellten Ausführungsbeispiel ist es auch möglich, ein Anregesignal jeweils leitungsselektiv zu bilden, indem die oben erläuterten Untersuchungen mit Strom und Spannung jeweils einer Leitung für sich getrennt durchgeführt werden.

Bei der erfindungsgemäßen Anordnung ist also durch die Bildung des Stromüberschreitungssignals S_{ü} dafür gesorgt, daß nach einer Anregung der Unterspannungs-Schutzanordnung 12 infolge starken Spannungsabfalls die Anregung nicht ständig aufrecht erhalten wird, sondern selbsttätig dann zurückgenommen wird, wenn das Stromüberschreitungssignal S_{ü} verschwindet. Nach einer Beseitigung des Fehlers im Leitungsabgang 1 oder im Motor 7 kann daher ohne weitere Schaltungsmaßnahmen nach dem Einschalten des Leistungsschalters 2 die Unterspannungs-Schutzanordnung 12 ihre Funktion wieder selbsttätig aufnehmen.

Abschließend ist noch anzumerken, daß durch ein weiteres UND-Glied 30 gemäß Fig. 2 eine Signalgabe darüber möglich ist, ob eine Anregung der Unterspannungs-Schutzanordnung 12 unter Verwendung des Stromüberschreitungssignals S_{ü} erfolgt ist. Ein Signal am Ausgang eines zusätzlichen UND-Gliedes 31 zeigt an, daß eine Anregung nur mittels des Spannungsunterschreitungssignals Sᵤ erfolgt ist, was durch die Stellung des Kontaktes 20 in der Lage "Aus" möglich ist.

## Patentansprüche

1. Anordnung mit einem an ein elektrisches Energieversorgungsnetz (L11, L12, L13) über einen Leistungsschalter (2) angeschlossenen Leitungsabgang (1) mit mindestens einem Verbraucher (7) und mit einer Unterspannungs-Schutzanordnung (12) für den mindestens einen Verbraucher, bei der die Unterspannungs-Schutzanordnung über eine Spannungswandler-Anordnung (8) an den Leitungsabgang (1) angeschlossen ist und
an die Unterspannungs-Schutzanordnung (12) eine im Zuge des Leistungsschalters (2) liegende Stromwandler-Anordnung (3) angeschlossen ist, welche ein Stromüberschreitungssignal (S_{ü}) bildet, wenn der mittels der Stromwandler-Anordnung (3) ermittelte Strom durch den Leitungsabgang (1) oberhalb eines vorgegebenen Stromschwellenwertes (I_{S}) liegt,
**dadurch gekennzeichnet**, daß
die Unterspannungs-Schutzanordnung (12) so ausgebildet ist, daß sie ein Spannungsunterschreitungssignal (Sᵤ) erzeugt, wenn die mittels der Spannungswandler-Anordnung (8) erfaßte Spannung an dem Leitungsabgang (1) unterhalb eines vorgegebenen Spannungsschwellenwertes (U_{S}) liegt, sowie ein Anregesignal (An) erzeugt, wenn das Spannungsunterschreitungssignal (Sᵤ) und das Stromüberschreitungssignal (S_{ü}) gleichzeitig auftreten.

2. Anordnung nach Anspruch 1,
**dadurch gekennzeichnet**, daß
die Unterspannungs-Schutzanordnung (12) derart ausgebildet ist, daß sie auf das Anregesignal (An) hin nach einer vorgegebenen Zeitverzögerung (Tᵤ) ein Auslösesignal (Au) an den Leistungsschalter (2) abgibt.

3. Anordnung nach Anspruch 1 oder 2,
**dadurch gekennzeichnet**, daß
die Unterspannungs-Schutzanordnung (12) so ausgebildet ist, daß sie nach einem auf das Auslösesignal (Au) folgenden Einschaltbefehl an den Leistungsschalter (2) das Stromüberschreitungssignal (S_{ü}) nach einer vorgewählten Zeitdauer (T_{S}) wirksam werden läßt.

4. Anordnung nach Anspruch 3,
**dadurch gekennzeichnet**, daß
die Unterspannungs-Schutzanordnung (12) so ausgebildet ist, daß sie nach dem Einschaltbefehl die Spannung an dem Leitungsabgang (1) auf Überschreiten eines vorgewählten Rückfallspannungswertes (U_{R}) überprüft, der oberhalb des vorgegebenen Spannungsschwellenwertes (U_{S}) liegt, und ein Betätigungssignal erzeugt, wenn das Überschreiten des Rückfallspannungswertes (U_{R}) nach Ablauf der vorgewählten Zeitdauer (T_{S}) erfolgt.

## Claims

1. Arrangement with an outgoing circuit (1) which is connected to an electrical power-supply network (L11, L12, L13) via a circuit-breaker (2), with at least one load (7) and with an undervoltage-protection arrangement (12) for the at least one load, wherein the undervoltage-protection arrangement is linked to the outgoing circuit (1) via a voltage-transformer arrangement (8), and there is linked to the undervoltage-protection arrangement (12) a current-transformer arrangement (3) which is situated within the scope of the circuit-breaker (2) and which creates a current-overshoot signal (S_{ü}) if the current through the outgoing circuit (1) which is ascertained by means of the current-transformer arrangement (3) lies above a predetermined current threshold (I_{S}),
characterised in that
the undervoltage-protection arrangement (12) is designed in such a way that it generates a voltage-undershoot signal (Sᵤ) if the voltage at the outgoing circuit (1) which is registered by means of the voltage-transformer arrangement (8) lies below a predetermined voltage threshold (U_{S}) and also generates an activating signal (An) if the voltage-undershoot signal (Sᵤ) and the current-overshoot signal (S_{ü}) appear simultaneously.

2. Arrangement according to Claim 1,
characterised in that
the undervoltage-protection arrangement (12) is designed in such a manner that it emits a tripping signal (Au) to the circuit-breaker (2) in response to the activating signal (An) after a predetermined time delay (Tᵤ).

3. Arrangement according to Claim 1 or 2,
characterised in that
the undervoltage-protection arrangement (12) is designed in such a way that after an intervention command to the circuit-breaker (2) following upon the tripping signal (Au) it causes the current-overshoot signal (S_{ü}) to become active after a preselected period of time (Tₛ).

4. Arrangement according to Claim 3,
characterised in that
the undervoltage-protection arrangement (12) is designed in such a way that after the intervention command it examines the voltage at the outgoing circuit (1) as to whether it exceeds a preselected relapse-voltage value (U_{R}), which lies above the predetermined voltage threshold (U_{S}), and generates an actuating signal if the relapse-voltage value (U_{R}) is exceeded after the preselected period of time (Tₛ) has elapsed.

## Revendications

1. Dispositif qui comporte un départ (1) de ligne raccordé par l'intermédiaire d'un disjoncteur (2) à un réseau (L11, L12, L13) électrique d'alimentation en énergie, comportant au moins un appareil (7) utilisateur et comportant un dispositif (12) de protection contre les sous-tensions pour le au moins un appareil utilisateur, dans lequel le dispositif de protection contre les sous-tensions est raccordé au départ (1) de ligne par l'intermédiaire d'un dispositif (8) à transformateur de tension et dans lequel il est raccordé au dispositif (12) de protection contre les sous-tensions un dispositif (3) à transformateur de courant qui se trouve à la suite du disjoncteur (2) et qui forme un signal (S_{ü}) de dépassement de courant si le courant dans le départ (1) de ligne déterminé au moyen du dispositif (3) à transformateur de courant est supérieur à une valeur (I_{S}) seuil de courant prescrite,
caractérisé en ce que le dispositif (12) de protection contre les sous-tensions est réalisé de manière à produire un signal (Sᵤ) de sous-dépassement de tension si la tension sur le départ (1) de ligne déterminée au moyen du dispositif (8) à transformateur de tension est inférieure à une valeur (U_{S}) de seuil de tension prescrite, et à produire un signal (An) d'excitation si le signal (Sᵤ) de sous-dépassement de tension et le signal (S_{ü}) de dépassement de courant apparaissent en même temps.

2. Dispositif suivant la revendication 1, caractérisé en ce que le dispositif (12) de protection contre les sous-tensions est réalisé de manière à fournir à la suite d'un signal (An) d'excitation, après une temporisation (Tᵤ) prescrite, un signal (Au) de déclenchement au disjoncteur (2).

3. Dispositif suivant la revendication 1 ou 2, caractérisé en ce que le dispositif (12) de protection contre les sous-tensions est réalisé de manière à rendre actif, après une instruction de connexion suivant le signal (Au) de déclenchement et adressé au disjoncteur (2), le signal (S_{ü}) de dépassement de courant après une durée (T_{S}) choisie à l'avance.

4. Dispositif suivant la revendication 3, caractérisé en ce que le dispositif (12) de protection contre les sous-tensions est réalisé de manière à vérifier, après l'instruction de connexion, si la tension sur le départ (1) de ligne dépasse une valeur (U_{R}) de tension de retour qui est choisie à l'avance et qui est supérieure à la valeur (U_{S}) seuil de tension prescrite, et à produire un signal d'actionnement si le dépassement de la valeur (U_{R}) de tension de retour s'effectue après écoulement de la durée (T_{S}) choisie à l'avance.
